# EUROPEAN PATENT APPLICATION

(11) **EP 4 806 861 A1**
(43) Date of publication of application: **16.09.2026**
(21) Application number: 25163011.7
(22) Date of filing: 11.03.2025
(51) Int. Cl.: C04B 14/04, C04B 18/14, C04B 28/08, C04B 28/04, C04B 18/12, C04B 28/10, C04B 28/14

(54) **HYDRAULIC BINDER COMPOSITIONS AND BUILDING MATERIALS COMPRISING DE-LITHIATED BETA-SPODUMENE AND ACTIVATOR**

(71) Applicant: Sika Technology AG, 6340 Baar (CH)
(72) Inventor: LE SAINT, Guillaume, 38070 St. Quentin Fallavier (FR); BEN HARRATH, Alexandre, 38070 St. Quentin Fallavier (FR); SOUDIER, Jerome, 38070 St. Quentin Fallavier (FR)
(74) Representative: Sika Patent Attorneys

(57) **Abstract**

The present invention relates to the field of hydraulic binder compositions and building materials comprising de-lithiated beta-spodumene and comprising at least one activator selected from the group consisting of alkali metal sulfate, alkali metal chloride, alkaline earth metal chloride, and mixtures thereof.

## Description

### Technical Field

The present invention relates to the field of hydraulic binder compositions and building materials comprising de-lithiated beta-spodumene.

### Background of the invention

Various aluminosilicates are known in the concrete industry as suitable supplementary cementitious materials. The use of such aluminosilicates is especially appealing where they are obtained as a by-product or waste stream from industrial processes and/or where their environmental footprint, especially carbon footprint, is lower as compared to cement clinker. In particular, the replacement of Portland cement by supplementary cementitious materials is of interest to reduce the environmental footprint of hydraulic binder compositions. Aluminosilicates are interesting replacement materials for Portland cement because they typically have pozzolanic properties and can therefore contribute to the mechanical strength of a cured hydraulic binder composition.

An aluminosilicate material that has become available more recently is de-lithiated beta-spodumene, sometimes also referred to as lithium slag. Spodumene is a lithium-bearing mineral of the approximate chemical formula LiAlSi₂O₆ that may exist in an alpha- and in a beta-form. While the alpha-form occurs naturally, the beta-form is formed by heating of alpha-spodumene to high temperatures. The beta-spodumene has a more open structure and therefore allows for easier lithium extraction for example by acid or alkaline leaching. The material remaining after lithium has been extracted is referred to as de-lithiated beta-spodumene. De-lithiated beta-spodumene has become more available in recent years, because demand for lithium, for example for use in batteries, has largely increased.

It is known to use de-lithiated beta-spodumene as supplementary cementitious material in concrete or cementitious mortar. For example, US 11,685,689 B2 (Nemaska Lithium Inc) discloses a process to obtain de-lithiated aluminosilicate from spodumene and its use in concrete and cementitious mortar. However, the concrete or cementitious mortars of US 11,685,689 B2 comprising de-lithiated spodumene have a lower mechanical strength when cured as compared to concrete or mortar entirely based on Portland cement. The mechanical strength decreasing with increasing content of de-lithiated spodumene. However, to reduce the environmental footprint of concrete or cementitious mortar, high replacement levels of Portland cement by de-lithiated beta-spodumene are required.

It is therefore desirable to find suitable materials and methods that can increase the mechanical strength of cured hydraulic binder compositions comprising de-lithiated beta-spodumene, especially at high contents of de-lithiated beta-spodumene.

### Summary of the invention

It is an object of the present invention to provide hydraulic binder compositions comprising de-lithiated beta-spodumene. The hydraulic binder compositions should have increased mechanical strength. Or, in other words, the de-lithiated beta-spodumene should be suitably activated in inventive hydraulic binder compositions.

It is another object of the present invention to provide methods to increase the mechanical strength of hydraulic binder compositions comprising de-lithiated beta-spodumene.

Surprisingly, it was found that alkali metal sulfates, alkali metal chlorides, and/or alkaline earth metal chlorides are suitable activators for de-lithiated beta-spodumene. These activators can in particular be used to increase the mechanical strength of hydraulic binder compositions comprising de-lithiated beta-spodumene.

The object of the present invention is therefore solved by a hydraulic binder composition as claimed in claim 1.

Further aspects of the present invention are the subject matter of independent claims. Preferred embodiments are the subject matter of dependent claims.

### Detailed Ways

In a first aspect, the present invention relates to a hydraulic binder composition comprising
a) de-lithiated beta-spodumene, and
b) at least one activator selected from the group consisting of alkali metal sulfate, alkali metal chloride, alkaline earth metal chloride, and mixtures thereof.

A hydraulic binder composition within the present context is a composition comprising at least one hydraulic binder. A hydraulic binder is a material that when contacted with water forms solid hydrate phases in a so-called hydration reaction.

Preferred hydraulic binders are cements, especially Portland cement, aluminate cement, and calcium sulfoaluminate cement.

Within the present context calcium oxide, calcium hydroxide, and calcium sulfate are considered as hydraulic binders.

Very preferably, a hydraulic binder composition of the present invention comprises at least one cement.

Preferably, Portland cement is according to standard EN 197-1 or EN 197-5. For example, Portland cement can be chosen from CEM I, CEM II, CEM III, CEM IV, or CEM V according to standard EN 197-1, or from CEM II or CEM VI according to standard EN 197-5.- Portland cement according to other standards, for example ASTM C150-07, is also suitable.

According to embodiments, the at least one cement is a calcium aluminate cement. Calcium aluminate cement is a material comprising one or more of the mineral phases CA, CA2, and C12A7 (with C: CaO, A: Al₂O₃) Further mineral and/or amorphous phases may additionally be present. The phase composition may be evaluated by XRD. For example, calcium aluminate cement can be according to standard EN 14647:2005.

According to embodiments, the at least one cement is a calcium sulfoaluminate cement. A calcium sulfoaluminate cement is a cement comprising C₄(A₃₋ₓFₓ)$ (with C: CaO; A: Al₂O₃; F: Fe₂O₃; $: SO₃) where x is an integer of from 0 - 3. According to embodiments, the hydraulic binder composition comprises a mixture of two, three, or more of Portland cements, calcium aluminate cement, and/or calcium sulfoaluminate cement.

According to embodiments, the hydraulic binder composition additionally comprises c) at least one binder selected from the group consisting of Portland cement, calcium hydroxide, calcium sulfate, and mixtures thereof.

According to embodiments, the hydraulic binder composition additionally comprises Portland cement in a weight ratio of de-lithiated beta-spodumene to Portland cement of between 5:95 to 95:5, preferably between 50:50 to 90:10.

Calcium hydroxide can especially be in the form of hydrated lime, caustic lime, builders' lime, slaked lime, pickling lime, cement kiln dust, class C fly ash, or pulp and paper mill fly ash.

According to embodiments, the hydraulic binder composition additionally comprises calcium hydroxide in a weight ratio of de-lithiated beta-spodumene to calcium hydroxide of between 20:1 to 1:1, preferably 10:1 to 5:1.

Calcium sulfate preferably is selected from the group consisting of gypsum, α-hemihydrate, β-hemihydrate, dihydrate, and anhydrite. Very preferably, the calcium sulfate is anhydrite.

According to embodiments, the hydraulic binder composition additionally comprises calcium sulfate in a weight ratio of de-lithiated beta-spodumene to calcium sulfate of between 20:1 to 1:1, preferably 10:1 to 5:1.

The use of calcium sulfate as a hydraulic binder is generally not preferred within the present context.

A hydraulic binder composition of the present invention comprises de-lithiated beta-spodumene.

De-lithiated beta-spodumene is a material resulting from the lithium extraction from the mineral spodumene having the approximate chemical formula LiAlSi₂O₆. Typically, beta-spodumene is formed by heating of alpha spodumene to high temperatures. The beta-spodumene has a more open structure and therefore allows for easier lithium extraction for example by acid or alkaline leaching. The material remaining after lithium has been extracted is referred to as de-lithiated beta-spodumene.

According to embodiments, the de-lithiated beta-spodumene comprises 20 - 35 w% of Al₂O₃, 60 - 70 w% of SiO₂, 0.1 - 2 w% of Fe₂O₃, and up to 3 w% of SO₃, in each case relative to the total dry weight of the de-lithiated beta-spodumene. The oxide composition of de-lithiated beta-spodumene can be determined by x-ray diffraction (XRD).

According to embodiments, de-lithiated beta-spodumene of the present invention has a particle size D10 of between 2 - 10 µm, especially between 2 - 4 µm, and a particle size D90 of between 30 - 100 µm, especially between 30 - 50 µm. The particle size D10 is the size in the particle size distribution where 10% of particles are smaller and 90% are bigger. The particle size D90is the size in the particle size distribution where 90% of particles are smaller and 10% are bigger. The medium particle size D50 of a preferred de-lithiated beta-spodumene is between 5 - 30 µm, especially between 5 - 10 µm. The particle size can be determined by laser diffraction according to standard ISO 13320:2009.

Very preferably, de-lithiated beta-spodumene has a low alkali content, especially a content of Na₂O equivalents of not more than 1.0 w%. Also very preferably, de-lithiated beta-spodumene has a low chloride content, especially a content of chlorides of not more than 0.01 w%.

The use of the at least one activator selected from the group consisting of alkali metal sulfate, alkali metal chloride, alkaline earth metal chloride, and mixtures thereof, in a hydraulic binder composition of the present invention leads to an activation of the de-lithiated beta-spodumene. The at least one activator is an activator for the de-lithiated beta-spodumene. Activation means that the reactivity of de-lithiated beta-spodumene to react in a hydraulic reaction is increased.

According to embodiments, the at least one activator is selected form the group consisting of sodium sulfate, potassium sulfate, magnesium sulfate, sodium chloride, potassium chloride, magnesium chloride, calcium chloride, and mixtures thereof.

A hydraulic binder composition of the present invention may additionally comprise further pozzolanic and/or latent hydraulic materials. For example, a hydraulic binder composition may comprise at least one pozzolane and/or latent hydraulic material selected from the group consisting of ironmaking slag, steelmaking slag, silica fume, fly ash, rice husk ash, burnt oil shale, calcined clay, and natural pozzolanes such as volcanic ashes.

A hydraulic binder composition of the present invention may additionally comprise aggregates, fillers, admixtures, and/or water.

Aggregates are materials that are not reactive in the hydration reaction of the hydraulic binder composition. Within the present context, aggregates are understood to be particulate materials, preferably with a particle size of more than 0.063 mm and up to several cm. One or more aggregates of different chemical composition and/or of different particle size distribution may be used. A very preferred aggregate is sand. Another preferred aggregate is gravel.

Fillers are understood to be very finely divided particulate materials, preferably with a particle size of lower than 0.063 mm. One or more fillers of different chemical composition and/or of different particle size distribution may be used. Fillers, within the present context, are non-reactive in the hydration reaction of the hydraulic binder composition but may have an accelerating effect as they can act as seeds for the precipitation of hydrate phases. A preferred filler within the present context is ground limestone.

Admixtures preferably are selected from the group consisting of plasticizers and/or superplasticizers, air entrainers, defoamers, stabilizers, rheology modifiers, thickeners, accelerators, retarders, redispersible polymers, water repellent agents, strength enhancing additives, fibers, pigments and/or dyes, fire retardants, corrosion inhibitors, biocides, or mixtures of two or more of these. Admixtures are not selected from alkali metal sulfate, alkali metal chloride, or alkaline earth metal chloride.

A hydraulic binder composition of the present invention may comprise free water. If free water is present, a preferred weight ratio of water to hydraulic binder is between 0.1 - 0.8. A hydraulic binder composition comprising free water is also referred to as a wet composition in the following.

It is, however, preferred that a hydraulic binder composition of the present invention is essentially free from water. Essentially free means that the amount of water present in the hydraulic binder composition is lower than 5 w%, preferably lower than 1 w%, especially lower than 0.1 w%, relative to the total weight of the hydraulic binder composition. A hydraulic binder composition essentially free from water is also referred to as a dry composition in the following. A dry composition has the advantage that it can be packaged and stored prior to use. Note that water absorbed by the surface of mineral particles is not counted in this respect.

According to embodiments, a hydraulic binder composition of the present invention comprises or consists of, relative to the total dry weight of the hydraulic binder composition unless otherwise stated,
a) 49.5 - 79.5 w% of de-lithiated beta-spodumene,
b) 0.5 - 5 w%, relative to the total dry weight of de-lithiated beta-spodumene, of at least at least one activator selected from the group consisting of alkali metal sulfate, alkali metal chloride, alkaline earth metal chloride, and mixtures thereof, and
c) 20 - 50 w% of Portland cement.

According to embodiments, a hydraulic binder composition of the present invention comprises or consists of, in each case relative to the total dry weight of the hydraulic binder composition unless otherwise stated,
a) 49.5 - 79.5 w% of de-lithiated beta-spodumene,
b) 0.5 - 5 w%, relative to the total dry weight of de-lithiated beta-spodumene, of at least at least one activator selected from the group consisting of alkali metal sulfate, alkali metal chloride, alkaline earth metal chloride, and mixtures thereof, and
c) 20 - 50 w% of calcium hydroxide.

According to embodiments, a hydraulic binder composition of the present invention comprises or consists of, in each case relative to the total dry weight of the hydraulic binder composition unless otherwise stated,
a) 40 - 50 w% of de-lithiated beta-spodumene,
b) 0.5 - 5 w%, relative to the total dry weight of de-lithiated beta-spodumene, of at least at least one activator selected from the group consisting of alkali metal sulfate, alkali metal chloride, alkaline earth metal chloride, and mixtures thereof, and
c) 40 - 50 w% of Portland cement,
d) 5 - 15 w% of calcium hydroxide, and
e) optionally 1 - 10 w% of calcium sulfate.

According to embodiments, the hydraulic binder composition comprises or consists of, relative to the total dry weight of the hydraulic binder composition unless otherwise stated,
a) 10 - 95 w%, preferably 25 - 85 w%, more preferably, 40 - 80 w%, especially 50 - 75 w%, of de-lithiated beta-spodumene,
b) 0.5 - 5 w%, preferably 1 - 3 w%, relative to the total dry weight of de-lithiated beta-spodumene, of at least at least one activator selected from the group consisting of alkali metal sulfate, alkali metal chloride, alkaline earth metal chloride, and mixtures thereof,
c) 1 - 80 w%, preferably 10 - 70 w%, more preferably 20 - 60 w%, especially 20 - 48 w%, of Portland cement and/or of calcium hydroxide, and
d) optionally 1 - 10 w% of calcium sulfate.

It is preferred that a hydraulic binder composition of the present invention does not contain alkali metal silicate solutions or water glass.

In another aspect, the present invention relates to a building material, in particular a concrete or mortar composition, comprising a hydraulic binder composition as described above.

All features and embodiments as described above also apply to this aspect.

A building material is a material comprising the hydraulic binder composition as described above and additional comprising at least one of aggregates, fillers, admixtures, and/or water. Aggregates, fillers, and admixtures are as described above. Preferably, the building material is a dry composition.

Examples for building materials of the present invention are concrete and mortars.

Especially, the building material is a cementitious tile adhesive, a grouting material, a self-levelling underlayment, a self-levelling overlayment, a render, a repair mortar, a masonry thin join mortar or concrete, a screed, a wall leveler for interior or exterior use, a non-shrink grout, a thin joint mortar, a waterproofing mortar, or an anchoring mortar.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

The building material can be obtained by intermixing a hydraulic binder composition of the present invention with at least one of aggregates, fillers, admixtures, and/or water. Methods and means for intermixing are not particularly limited and are known to the skilled person.

In another aspect, the present invention relates to a cured body, especially a part of a building, obtained by curing a building material as described above.

All features and embodiments as described above also apply to this aspect.

The curing of a hydraulic binder composition starts upon addition of water to a dry hydraulic binder composition. Solid hydrate phases are formed and precipitated during the curing and mechanical strength is developed thereby.

It is preferred that curing is done at temperatures between +4 °C to + 40 °C and at ambient air pressure, preferably appr. 1013 mbar. Curing at higher temperatures and different pressures, for example in an autoclave, is also possible, but is not preferred.

In another aspect, the present invention relates to a method to increase the mechanical strength of a cured hydraulic binder composition, said method comprising the steps of:
(i) providing a hydraulic binder composition comprising de-lithiated beta-spodumene,
(ii) intermixing or intergrinding at least one activator selected from the group consisting of alkali metal sulfate, alkali metal chloride, alkaline earth metal chloride, and mixtures thereof, with the hydraulic binder composition, and
(iii) allowing the hydraulic binder composition to cure.

All features and embodiments as described above also apply to this aspect.

In particular, according to embodiments, the at least one activator is selected from the group consisting of sodium sulfate, potassium sulfate, magnesium sulfate, sodium chloride, potassium chloride, magnesium chloride, calcium chloride, and mixtures thereof.

In particular, according to embodiments, the at least one activator is intermixed in a weight ratio of 0.5 - 10 w%, preferably 3 - 8 w%, relative to the total dry weight of the de-lithiated beta-spodumene.

The term "mechanical strength" within the present context in particular relates to the compressive and/or flexural strength of a cured hydraulic binder composition. For example, the compressive strength is tested according to standard EN 12390-3. For example, the flexural strength is tested according to standard EN 12390-5.

The curing of a hydraulic binder composition starts upon addition of water to a dry hydraulic binder composition. Solid hydrate phases are formed and precipitated during the curing and mechanical strength is developed thereby. Typically, the amount of water added for curing is given as a weight ratio to hydraulic binder. Within the present context, water is added to a dry hydraulic binder composition in a weight ratio of water to hydraulic binder of between 0.1 - 0.8 to start the curing. Curing proceeds with time and the mechanical strength of a cured hydraulic binder composition can be measured after a certain given time has elapsed. For example, it is possible to measure the mechanical strength of a hydraulic binder composition within 1 hour, 2 hours, 24 hours, 2 days, 7 days, 28 days, 56 days, or longer, in each case from the addition of water. Within the present context, curing is done at 23 °C and 50% r.h. A "cured hydraulic binder composition" within the present context therefore is a hydraulic binder composition that has reacted with water for a given time, for example reacted with water for 1 hour, 2 hours, 24 hours, 2 days, 7 days, 28 days, 56 days, or longer.

The term "increase of mechanical strength" within the present context relates to an increase of mechanical strength, in particular compressive strength and/or flexural strength, of a cured hydraulic binder composition as compared to a reference. In particular, the mechanical strength of a cured hydraulic binder composition comprising de-lithiated beta-spodumene and comprising the at least one activator selected from the group consisting of alkali metal sulfate, alkali metal chloride, alkaline earth metal chloride, and mixtures thereof, is higher as compared to the same cured hydraulic binder composition comprising de-lithiated beta-spodumene but not comprising the at least one activator.

Intermixing of at least one alkali metal sulfate in a method of the present invention in particular leads to an increase in early mechanical strength. Early mechanical strength is to be understood as the mechanical strength, especially compressive strength, obtained after several hours and up to 7 days of curing at 23 °C and 50% r.h.

Intermixing of at least alkali metal chloride or alkaline earth metal chloride in a method of the present invention in particular leads to an increase in late mechanical strength. Late mechanical strength is to be understood as the mechanical strength, especially compressive strength, obtained after not less than 7 days, typically 28 days or longer, of curing at 23 °C and 50% r.h.

It is possible to intermix at least one alkali metal sulfate and at least one alkali metal chloride or alkaline earth metal chloride with the hydraulic binder composition. However, this is less preferred within the present context. This is because surprisingly, intermixing a combination of at least one alkali metal sulfate and at least one alkali metal chloride or alkaline earth metal chloride, leads to an increase in late mechanical strength, but not to an increase in early mechanical strength.

Intermixing the at least one alkali metal sulfate, preferably sodium sulfate, potassium sulfate, and/or magnesium sulfate, with the hydraulic binder composition, and/or intermixing the at least one alkali metal chloride or at least one alkaline earth metal chloride, preferably sodium chloride, potassium chloride, magnesium chloride, and/or calcium chloride, with the hydraulic binder composition is not particularly limited.

It is generally preferred that the at least one alkali metal sulfate or the at least one alkali metal chloride or at least one alkaline earth metal chloride is provided in the form of a free flowing powder. Intermixing of the powder with the hydraulic binder composition is then possible.

It is particularly preferred to intermix the at least one alkali metal sulfate, preferably sodium sulfate, potassium sulfate, and/or magnesium sulfate, or the at least one alkali metal chloride or at least one alkaline earth metal chloride, preferably sodium chloride, potassium chloride, magnesium chloride, and/or calcium chloride, in powder form with a dry hydraulic binder composition as described above. Means for mixing dry mineral powders are known to the skilled person.

It is, however, also possible to intermix the at least one alkali metal sulfate, preferably sodium sulfate, potassium sulfate, and/or magnesium sulfate, or the at least one alkali metal chloride or at least one alkaline earth metal chloride, preferably sodium chloride, potassium chloride, magnesium chloride, and/or calcium chloride, in powder form with a wet hydraulic binder composition as described above.

It is also possible to dissolve or disperse the at least one alkali metal sulfate or the at least one alkali metal chloride or at least one alkaline earth metal chloride in a solvent, preferably in water, and then intermix the solution or dispersion with the hydraulic binder composition. For example, the at least one alkali metal sulfate or the at least one alkali metal chloride or at least one alkaline earth metal chloride can be dissolved in the mixing water and then be intermixed with a dry hydraulic binder composition as described above.

Means for wet mixing are known to the skilled person. However, wet mixing is less preferred within the present context.

The term "intergrinding" relates to a process where the at least one activator selected from the group consisting of alkali metal sulfate, alkali metal chloride, alkaline earth metal chloride, and mixtures thereof, is co-ground with at least one constituent of the hydraulic binder composition.

For example, it is possible to add the at least one activator before and/or during the grinding of de-lithiated beta-spodumene. It is likewise possible to add the at least one activator before and/or during the grinding of the hydraulic binder present in the hydraulic binder composition, for example during the grinding of cement.

Suitable means for the grinding of mineral materials such as cement are known to the skilled person. For example, grinding can be done on ball mills or vertical roller mills.

Other grinding aids can be added together with the at least one activator.

### Examples

Hydraulic binder compositions were prepared by dry mixing de-lithiated beta-spodumene (DBS; particle size D50: 8.8 µm, D10: 2.5 µm, D90: 36.4 µm; 29.4 w% Al₂O₃, 69.2 w% SiO₂, 0.28 w% Fe₂O₃, 0.35 w% SO₃), Portland cement (CEM I 42.5), calcium hydroxide (hydrated lime "Tradical H90"), sodium sulfate (Sigma-Aldrich, >99.0% purity), and calcium chloride (Sigma-Aldrich, >97.0% purity) in the amounts indicated in below tables on a Hobart mixer at 23 °C/50% r.h. for 3 minutes. Visually homogeneous dry mixes were obtained. Water was added to the respective dry mix in an amount to yield a weight ratio of water to powder (w/p ratio) as indicated in below tables. Mixing was then continued for another 2 minutes.

Compressive strength (C.S.) was tested according to standard EN 12390-3 after the time indicated in below tables.

**Table 1: Comparative example Ref-1, inventive examples 1 - 3**

| **Example** | **Ref-1** | **1** | **2** | **3** |
|---|---|---|---|---|
| DBS [g] | 80 | 77.8 | 77.8 | 76.4 |
| Ca(OH)₂ [g] | 20 | 19.2 | 19.2 | 19.1 |
| Na₂SO₄ [g] | 0 | 3 | 0 | 3 |
| CaCl₂ [g] | 0 | 0 | 3 | 1.5 |
| w/p ratio | 0.42 | 0.42 | 0.42 | 0.44 |
| C.S. @ 2d [MPa] | 1.7 | 7.7 | 1.6 | 1.8 |
| C.S. @ 7d [MPa] | 12.6 | 19.6 | 14.6 | 21.0 |
| C.S. @ 28d [MPa] | 23.4 | 22.6 | 28.2 | 25.7 |

| | | | | |
|---|---|---|---|---|
| n.m.: not measured | | | | |

**Table 2: Comparative example Ref-2 Ref-3, inventive examples 4 - 8**

| **Example** | **Ref-2** | **4** | **5** | **6** | **Ref-3** | **7** | **8** |
|---|---|---|---|---|---|---|---|
| DBS [g] | 50 | 43.55 | 43.55 | 46.08 | 50 | 48.5 | 47.75 |
| CEM I [g] | 50 | 43.55 | 43.55 | 46.08 | 50 | 48.5 | 47.75 |
| Ca(OH)₂ [g] | 10 | 9.9 | 9.9 | 4.84 | 0 | 0 | 0 |
| Na₂SO₄ [g] | 0 | 3 | 0 | 3 | 0 | 3 | 3 |
| CaCl₂ [g] | 0 | 0 | 3 | 0 | 0 | 0 | 1.5 |
| w/p ratio | 0.40 | 0.40 | 0.40 | 0.40 | 0.40 | 0.40 | 0.40 |
| C.S. @ 2d [MPa] | 13.5 | 23.8 | 14.8 | 27.4 | 14.6 | 24.2 | 14.4 |
| C.S. @ 7d [MPa] | 32.2 | 45.5 | 44 | 47 | 29.3 | 40.3 | 47.5 |
| C.S. @ 28d [MPa] | 50.8 | 51.8 | 65.7 | 55.2 | 52 | 48.2 | 62.3 |

| | | | | | | | |
|---|---|---|---|---|---|---|---|
| n.m.: not measured | | | | | | | |

It can be seen from the results of the above tables 1 and 2 that the addition of sodium sulfate and/or calcium chloride leads to an activation of de-lithiated beta-spodumene in various hydraulic binder compositions. The activation is measurable as an increase in mechanical strength after a given time. Notably, sodium sulfate is suitable to increase the early mechanical strength (the mechanical strength after 2 and 7 days of curing) while it has no measurable effect on late mechanical strength (the mechanical strength after 28 days of curing). Calcium chloride, on the other hand is especially suitable to increase the late mechanical strength while it has less effect on early mechanical strength.

## Claims

1. A hydraulic binder composition comprising
a) de-lithiated beta-spodumene, and
b) at least one activator selected from the group consisting of alkali metal sulfate, alkali metal chloride, alkaline earth metal chloride, and mixtures thereof.

2. The hydraulic binder composition according to claim 1, **characterized in that** it additionally comprises
c) at least one binder selected from the group consisting of Portland cement, calcium hydroxide, calcium sulfate, and mixtures thereof.

3. The hydraulic binder composition according to claim 2, **characterized in that** it additionally comprises Portland cement in a weight ratio of de-lithiated beta-spodumene to Portland cement of between 5:95 to 95:5, preferably between 50:50 to 90:10.

4. The hydraulic binder composition according to at least one of claims 2 or 3, **characterized in that** it additionally comprises calcium hydroxide in a weight ratio of de-lithiated beta-spodumene to calcium hydroxide of between 20:1 to 1:1, preferably 10:1 to 5:1.

5. The hydraulic binder composition according to at least one of claims 2 - 4, **characterized in that** it additionally comprises calcium sulfate in a weight ratio of de-lithiated beta-spodumene to calcium sulfate of between 20:1 to 1:1, preferably 10:1 to 5:1.

6. The hydraulic binder composition according to at least one of claims 2 - 5, comprising or consisting of, in each case relative to the total dry weight of the hydraulic binder composition unless otherwise stated,
a) 10 - 95 w%, preferably 25 - 85 w%, more preferably, 40 - 80 w%, especially 50 - 75 w%, of de-lithiated beta-spodumene,
b) 0.5 - 5 w%, preferably 1 - 3 w%, relative to the total dry weight of de-lithiated beta-spodumene, of at least at least one activator selected from the group consisting of alkali metal sulfate, alkali metal chloride, alkaline earth metal chloride, and mixtures thereof,
c) 1 - 80 w%, preferably 10 - 70 w%, more preferably 20 - 60 w%, especially 20 - 48 w%, of Portland cement and/or of calcium hydroxide, and
d) optionally 1 - 10 w% of calcium sulfate.

7. The hydraulic binder composition according to at least one of the previous claims, **characterized in that** the at least one activator is selected form the group consisting of sodium sulfate, potassium sulfate, magnesium sulfate, sodium chloride, potassium chloride, magnesium chloride, calcium chloride, and mixtures thereof.

8. The hydraulic binder composition according to at least one of the previous claims, **characterized in that** the de-lithiated beta-spodumene comprises 20 - 35 w% of Al₂O₃, 60 - 70 w% of SiO₂, 0.1 - 2 w% of Fe₂O₃, and up to 3 w% of SO₃, in each case relative to the total dry weight of the de-lithiated beta-spodumene.

9. A building material, in particular a concrete or mortar composition, comprising a hydraulic binder composition as claimed in at least one of claims 1 - 8.

10. A cured body, especially a part of a building, obtained by curing a building material as claimed in claim 9.

11. A method to increase the mechanical strength of a cured hydraulic binder composition, said method comprising the steps of:
(i) providing a hydraulic binder composition comprising de-lithiated beta-spodumene,
(ii) intermixing or intergrinding at least one activator selected from the group consisting of alkali metal sulfate, alkali metal chloride, alkaline earth metal chloride, and mixtures thereof, with the hydraulic binder composition, and
(iii) allowing the hydraulic binder composition to cure.

12. The method as claimed in claim 11, **characterized in that** the at least one activator is selected from the group consisting of sodium sulfate, potassium sulfate, magnesium sulfate, sodium chloride, potassium chloride, magnesium chloride, calcium chloride, and mixtures thereof.

13. The method as claimed in any of claims 11 - 12, **characterized in that** the at least one activator is intermixed in a weight ratio of 0.5 - 10 w%, preferably 3 - 8 w%, relative to the total dry weight of the de-lithiated beta-spodumene.
